# EUROPÄISCHE PATENTSCHRIFT

(11) **EP 1 035 003 B1**
(45) Veröffentlichungstag und Bekanntmachung des Hinweises auf die Patenterteilung: **06.04.2005**
(21) Anmeldenummer: 00100624.6
(22) Anmeldetag: 13.01.2000
(51) Int. Cl.: B62D 21/11, B62D 29/00

(54) **Fahrschemel für ein Kraftfahrzeug**
Subframe for a motor vehicle
Cadre auxiliaire pour un véhicule automobile

(30) Priorität: 06.03.1999 DE 19909945
(43) Veröffentlichungstag der Anmeldung: 13.09.2000
(73) Patentinhaber: Dr.Ing. h.c.F. Porsche Aktiengesellschaft, 70435 Stuttgart (DE)
(72) Erfinder: Kunert, Reinhard, 71287 Weissach (DE); Frasch, Wilhelm, 72644 Oberboihingen (DE)

(56) Entgegenhaltungen:
- WO-A-96/19373
- DE-A- 10 007 790
- DE-A- 19 703 951
- US-A- 5 562 308

## Beschreibung

Die Erfindung bezieht sich auf einen Fahrschemel für ein Kraftfahrzeug, insbesondere für eine Hinterachse eines Kraftfahrzeugs nach dem Oberbegriff des Anspruchs 1.

Aus der DE 41 29 538 C2 ist ein Fahrschemel bekannt, der in Fahrzeuglängsrichtung verlaufende Seitenteile und hierzu angeordnete Querträger umfaßt, die miteinander verbunden sind. Die Seitenteile weisen Lagerungen für Radführungsglieder einer Radaufhängung und der eine Querträger weist eine Lagerung für ein HinterachsDifferential auf. Aus der gattungsgemäßen DE 195 29 334 C2 ist ein Unterrahmen für ein Kraftfahrzeug bekannt, der jeweils ein oberes und unteres Seitenelement umfaßt, wobei das obere Seitenelement und das untere Seitenelement sich jeweils in Kraftfahrzeuglängsrichtung erstrecken und zueinander einen Vertikalabstand aufweisen und daß diese Seitenelemente über Querträger miteinander verbunden sind. Zwischen den beabstandet angeordneten Seitenträgern ist mittig ein Stützelement vorgesehen und durch die Öffnung der Seitenträger kann eine Antriebswelle geführt werden. Des Weiteren ist auf diesem Unterrahmen ein Getriebeaggregat gelagert und es sind an den Seitenträgern Lagerungen für Radführungsglieder vorgesehen.

Aufgabe der Erfindung ist es, einen verwindungssteifen, stabilen Fahrschemel für ein Kraftfahrzeug zu schaffen, der als Montageeinheit am Fahrzeugaufbau mit der Radaufhängung, dem Bremsenmodul und eventuell dem Getriebeaggregat am Fahrzeugaufbau insgesamt befestigbar ist.

Diese Aufgabe wird erfindungsgemäß durch die Merkmale des Anspruchs 1 gelöst. Weitere vorteilhafte Merkmale beinhalten die Unteransprüche.

Es wird ein erfindungsgemäßer Fahrschemel mit zwei übereinander angeordneten Längsträgern geschaffen, die zwischen sich eine Durchstecköffnung für Achswellen eines Getriebeaggregates aufweisen. Die Träger einer Seite laufen in etwa endseitig zusammen und sind mit den Querträgern verbunden, wobei das Getriebeaggregat über eine Dreipunktlagerung an den Quer- und Längsträgern gehalten ist. Die Achswellen des Aggregats erstrecken sich frei durch die Durchstecköffnungen zum Rad hin.

Hierdurch wird in vorteilhafter Weise ein Fahrschemel gebildet, der einen steifen Festigkeitsverbund für die Lagerung der schwenkbaren Radaufhängungen und für eine stabile Lagerung des Hinterachs-Differentials aufweist.

Die Anordnung der beiden rohrförmigen Längsträger einer Seite kann den Erfordernissen an den Raum im Fahrzeug als auch an die Bedingungen der Radaufhängung angepaßt werden, da diese Längsträger durch entsprechende Kröpfungen teilweise in verschiedenen Raumebenen liegen können.

Hierdurch wird es möglich, daß der eine untenliegende Längsträger gemäß Anspruch 2 endseitig jeweils ein - in Fahrtrichtung gesehen - vorderes Lager und der obenliegende weitere Längsträger jeweils ein - in Fahrtrichtung gesehen - hinteres Lager zur Befestigung am Fahrzeugbau aufweist. Desweiteren können die Lager gemäß Anspruch 3 in verschiedenen horizontalen Höhenebenen liegen, wobei die vorderen Lager in einer tiefergelegenen Ebene liegen als die hinteren Lager.

Die rohrförmigen Längsträger werden gemäß Anspruch 5 beispielsweise durch innenhochdruckumgeformte Bauteile gebildet, so daß die Durchmesser der Rohre an die räumlichen Verhältnisse und an die Festigkeitsanforderungen anpaßbar sind.

Die Querträger sind gemäß Anspruch 7 jeweils zweischalig ausgeführt und bestehen aus zwei zusammengesetzten, einen Hohlraum einschließenden Tragprofil, wodurch die Herstellung der Träger vereinfacht und ein Leichtbauteil gebildet wird.

Insbesondere werden gemäß Anspruch 8 für den - in Fahrtrichtung vornliegenden Querträger - zwei U-Profile oder zwei Hutprofile und für die hintenliegenden Querträger zwei Profile verwendet, wobei das eine Profil als Winkelprofil und das andere als U-förmiges Profil ausgebildet ist.

Der hintenliegende Querträger weist gemäß Anspruch 9 eine äußere Einbuchtung in einem Mittenbereich für einen Teil einer Reserveradmulde auf, wodurch der Trägerquerschnitt sich vom endseitigen quadratischen bzw. rechteckigen Querschnitt bis zu einem mittigen dreieckförmigen Querschnitt ändert.

An den oberen und unteren Längsträgern sind gemäß Anspruch 10 und 11 Lagerkonsolen für Lager von Querlenkern eines oberen Radführungsgliedes befestigt, wobei im untenliegenden Längsträger weitere Lagerkonsolen für Lager eines Dreieckslenkers eines unteren Radführungsgliedes vorgesehen sind.

Das Hinterachs-Differential bzw. das Getriebeaggregat ist über eine Dreipunktlagerung im Rahmengestell des Fahrschemels gehalten, wobei vorzugsweise der hintere Querträger zwei Lagerungen und der vordere Querträger eine Lagerung aufweist.

Damit in einfacher Weise der Gehäusehals des zwischen den Querträgern angeordnete Hinterachs-Differentials nach vorne - in Fahrtrichtung gesehen - geführt und in einer vorbestimmten Ebene gelagert werden kann, ist der vordere Querträger mit einer etwa mittigen Aufnahmemulde versehen, wodurch die beiden, den Träger bildenden Profile entsprechend gebogen gestaltet sind und sich eine konkave Mulde ergibt.

Damit in einfacher Weise ohne zusätzliche Konsolen oder Versteifungen die Lager am Fahrschemel zum Befestigen am Fahrzeugaufbau angeordnet werden können, sind gemäß Anspruch 12 die freien Enden der Längsträger flach verformt, so daß sich zwei parallele beabstandete Flächen ergeben. In einer halbkreisförmigen stirnseitigen Ausnehmung wird dann das Lager gehalten und über eine Schweißung befestigt.

Ein Ausführungsbeispiel der Erfindung ist in der Zeichnung dargestellt und wird im folgenden näher beschrieben.

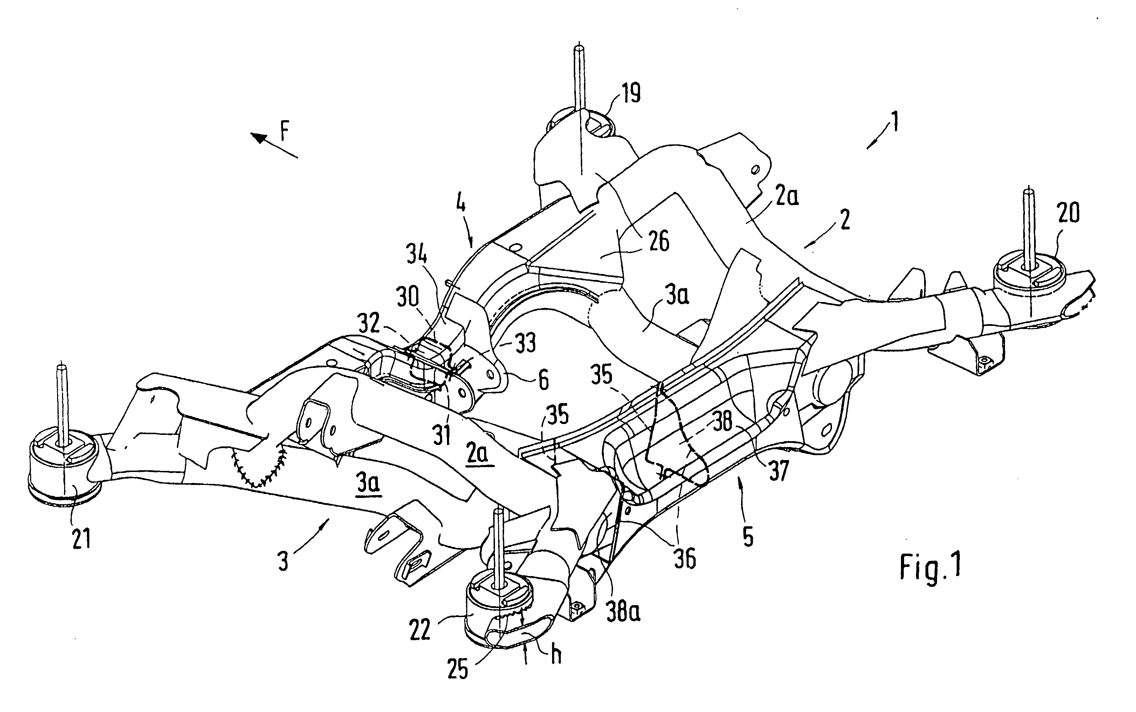

Es zeigen
- Fig. 1: eine schaubildliche Darstellung eines Hinterachs-Fahrschemels,

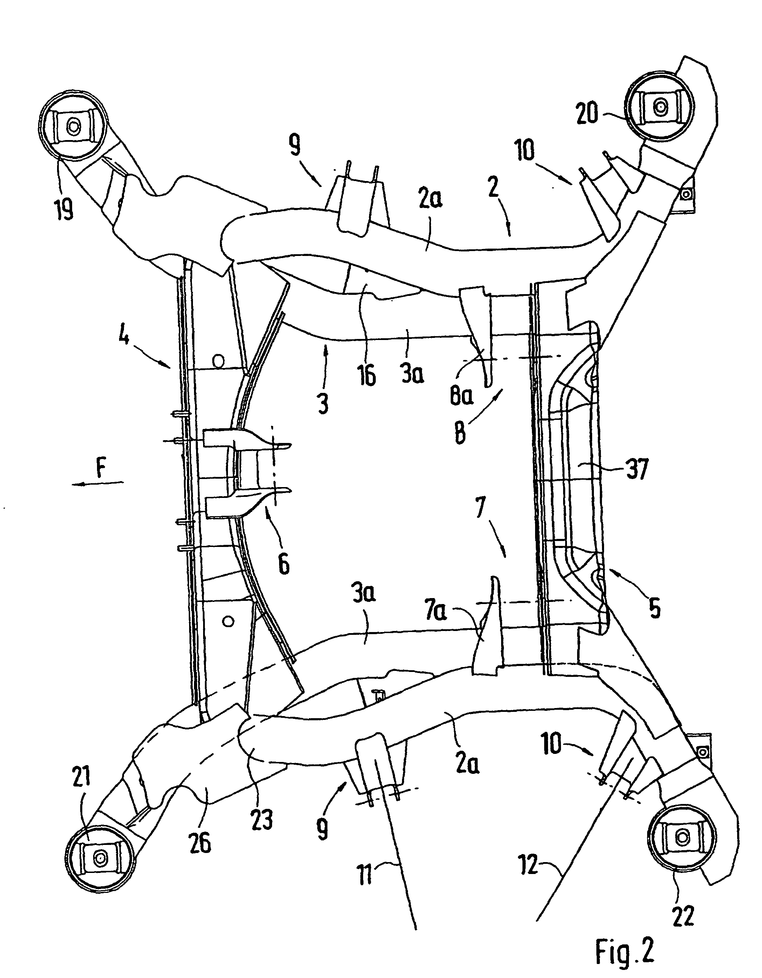

- Fig. 2: eine Draufsicht auf den Fahrschemel,

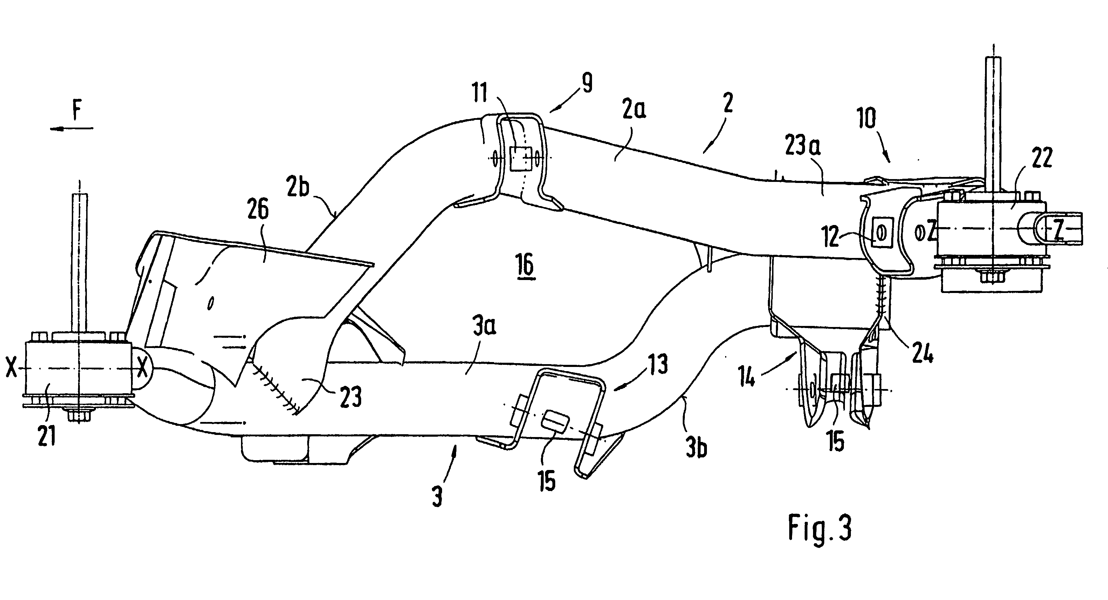

- Fig. 3: eine Seitenansicht des Fahrschemels,

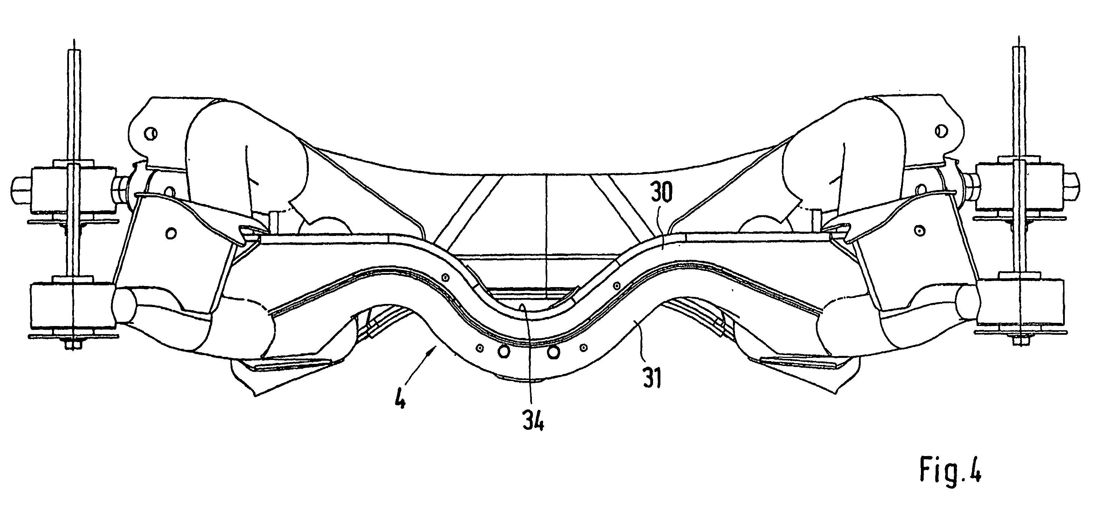

- Fig. 4: eine Vorderansicht des Fahrschemels,

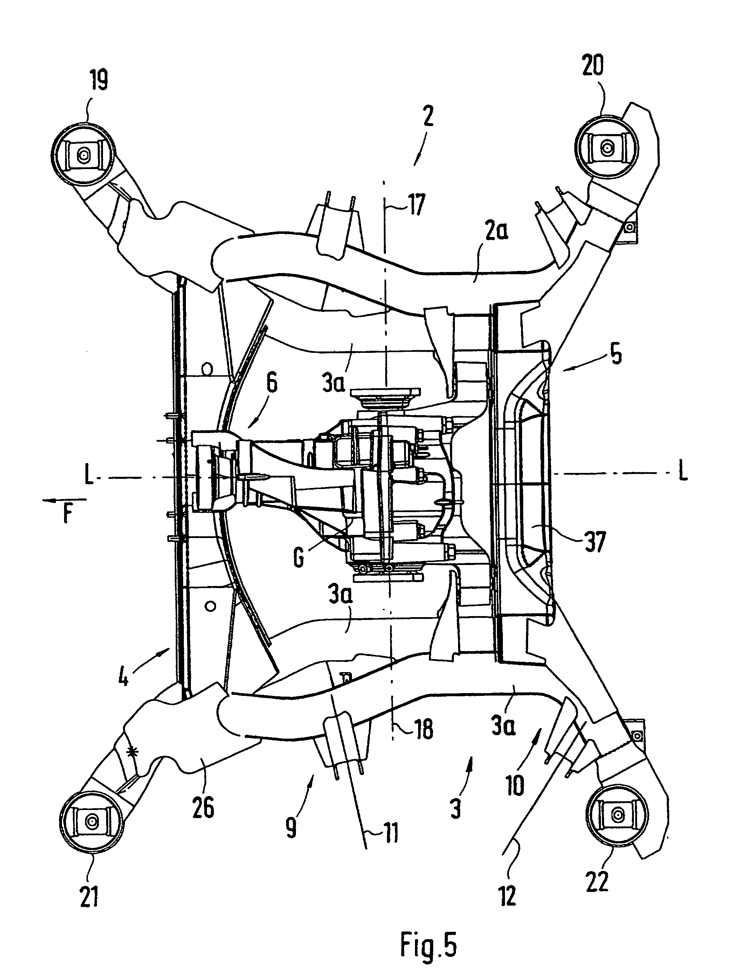

- Fig. 5: eine Draufsicht auf den Fahrschemel mit Getriebeaggregat,

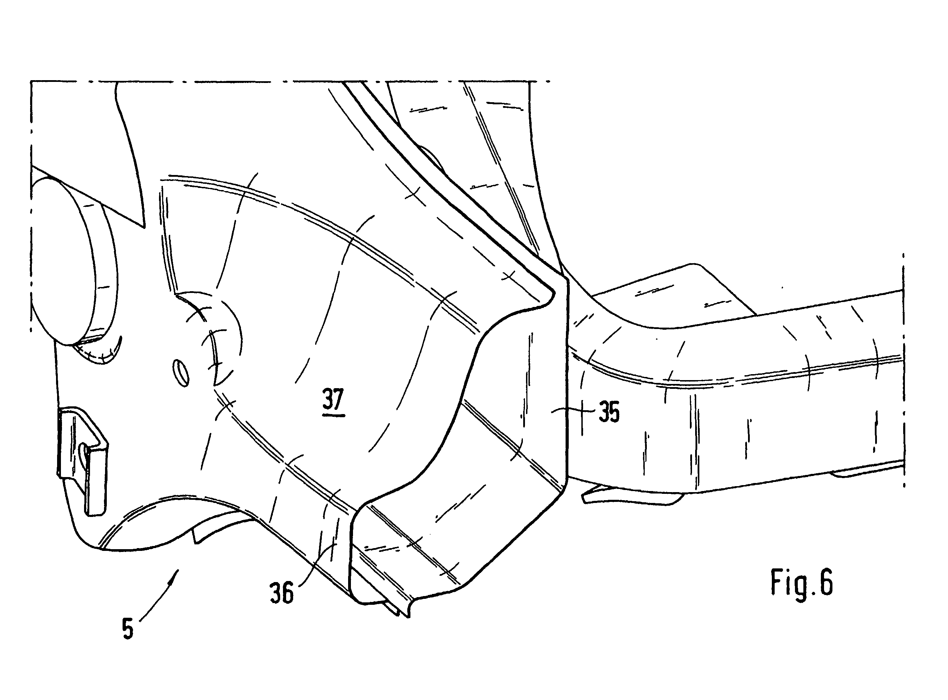

- Fig. 6: eine Schnittdarstellung des hintenliegenden Querträgers aus zwei Profilen bestehend und

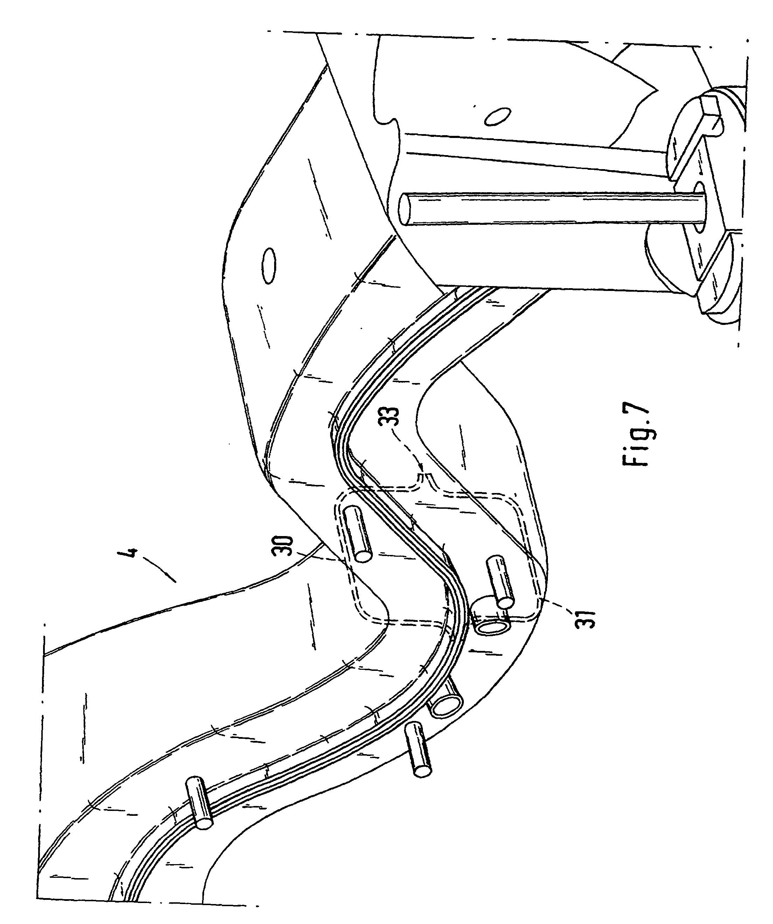

- Fig. 7: eine Schnittdarstellung des vornliegenden Querträgers aus zwei U-Profilen bestehend.

Der Fahrschemel 1 für ein Kraftfahrzeug umfaßt im wesentlichen seitliche Längsträgerstrukturen 2, 3, die über zwei zueinander beabstandete Querträger 4, 5 miteinander verbunden sind. In diesem aus den Längsträgem 2, 3 und den Querträgern 4, 5 gebildeten Fahrschemel 1 ist ein Getriebeaggregat G, wie beispielsweise ein Hinterachs-Differential, in einer Dreipunktlagerung 6, 7, 8 gehalten. An den Längsträgem 2, 3 sind Lagerkonsolen 9, 10 für Querlenker 11, 12 von obenliegenden Radführungsgliedern und weitere Lagerkonsolen 13, 14 für einen Lenker 15 bzw. Lenkerarme eines untenliegenden Radführungsgliedes vorgesehen.

Die Längsträgerstruktur 2, 3 einer Fahrzeugseite weist jeweils übereinander angeordnete und vorzugsweise aus zwei Rohren 2a, 3a bestehende Träger auf, welche wenigstens in einer horizontalen und wenigstens einer vertikalen Ebene Kröpfungen aufweist, derart, daß sich eine Durchstecköffnung 16 zwischen den beiden Rohren 2a und 3a, welche die eigentlichen Längsträger sind, ergibt. Diese Durchstecköffnungen 16 dienen zur Durchführung von Achswellen 17, 18 des Getriebeaggregats G zum Fahrzeugrad hin.

Die Befestigung des Fahrschemels 1 am Fahrzeugaufbau erfolgt mittels vier Lager 19, 21 und 20, 22, welche jeweils endseitig des Längsträgers 2a, 3a angeordnet sind. So weist der untenliegende Längsträger 3a das - in Fahrtrichtung F gesehen - vornliegende Lager 19, 21 und der obenliegende Längsträger 2a die - in Fahrtrichtung F gesehen - hintenliegenden Lager 20, 22 auf. Diese Lager sind in verschiedenen horizontalen Höhenebenen X-X und Z-Z angeordnet.

Die Längsträger 2a, 3a weisen jeweils abgebogene Teilstücke 2b und 3b auf, die gegeneinander gerichtet sind und zwischen sich die Durchstecköffnung 16 bilden. So stößt der obere Längsträger 2a mit seinem vorderen freien Ende 23 gegen den unteren Längsträger 3a und wird über eine Schweißung mit diesem verbunden. Das hintere freie Ende 21 a des oberen Längsträgers 2a ist über eine Strecke mit dem freien Ende 24 des untenliegenden Längsträgers 3a übereinanderliegend verbunden.

Die rohrförmigen Längsträger 2a, 3a sind innenhochdruckumgeformte Bauteile. Denkbar sind auch gezogene Rohre oder Gußteile. Als Material kann Leichtmetall oder Eisenwerkstoff verwendet werden. Ebenso können auch Profile Verwendung finden. Die Auswahl der Werkstoffe und die Zusammensetzung der Bauteile erfolgt entsprechend den gestellten Anforderungen.

Zur Befestigung und zur Aufnahme der Lager 19 bis 22 sind die mit rundem Querschnitt versehenen Längsträger 2a, 3a endseitig jeweils flachgedrückt, so daß eine gewisse Höhe h bestehen bleibt. In einer halbkreisförmigen, stirnseitigen Aufnahme 25 wird das Lager 19, 20, 21 und 22 eingesetzt und beispielsweise durch eine Schweißung festgelegt.

Der vornliegende Querträger 4 ist mit dem Längsträger 2a, 3a unmittelbar sowie zusätzlich über mindestens ein Konsolblech 26 verbunden.

Die beiden Querträger 4, 5 sind jeweils zweischalig, aus Profilen bestehend, ausgeführt. Der vornliegende Querträger 4 besteht im Querschnitt aus zwei U- bzw. Hutprofilen 30, 31, die zusammengesetzt ein Trägerprofil mit einem Hohlraum 32 bilden und an den abgewinkelten Rändern 33 miteinander verbunden sind.

In der Längsmittenebene L-L des Fahrzeugs weist der Querträger 4 eine nach oben hin offene Aufnahmemulde 34 für einen Gehäusehals des Getriebeaggregats G auf. Unterhalb dieser Aufnahmemulde 34 sind Lagerkonsolen des Lagers 6 vorgesehen, in welchen das Getriebeaggregat G gehalten wird.

Der hintenliegende Querträger 5 besteht aus zwei Profilen 35, 36 die zusammengesetzt sind. Das innere Winkelprofil 35 weist einen langen vertikalen Schenkel und einen weiteren schmäleren horizontalen Schenkel mit einer Abstellung auf. Das äußere Profil 36 ist als U-Profil ausgeführt und in einem mittleren Bereich des Querträgers 5 durch eine Einbuchtung 37 verformt, so daß sich statt eines viereckförmigen Hohlraumes 38a an den Enden ein dreieckförmiger Hohlraum 38 mittig ergibt.

Zwischen Lagerkonsolen 7a und 8a an den oberen Längsträgem 2a jeder Seite und dem hinteren Querträger 5 sind die Lager 7, 8 des Getriebeaggregats G gehalten.

Am obenliegenden Längsträger 2a sind Lagerkonsolen 9, 10 zur schwenkbaren Lagerung von aufgelösten Querlenkem 11, 12 angeordnet. Die untere Lenkerebene des Radführungslenkers ist beispielsweise als Dreieckslenker 15 in den Lagerkonsolen 13, 14 schwenkbar gehalten. Die Lagerkonsole 14 dient gleichzeitig zur Befestigung des untenliegenden Längsträgers 3a.

## Patentansprüche

1. Fahrschemel für ein Kraftfahrzeug, insbesondere für eine Hinterachse eines Kraftfahrzeugs, mit einem am Fahrzeugaufbau befestigbaren Rahmengestell, wenigstens bestehend aus Querträgern (4, 5), die mit Längsträgern (2a, 3a) verbunden sind und an den Längsträgern (2a, 3a) Lagerungen (9, 10 und 11, 12) für Radführungsglieder vorgesehen sind und im Rahmengestell zwischen den Längs- und Querträgern (2a, 3a und 4, 5) ein Getriebeaggregat (G) angeordnet ist, wobei eine Längsträgerstruktur (2, 3) jeder Seite jeweils zwei übereinander angeordnete Längsträger (2a, 3a) umfaßt, die zwischen sich eine Durchstecköffnung (16) für Achswellen (17, 18) des Getriebeaggregats (G) aufweisen und etwa endseitig zusammenlaufen und mit den Querträgern (4, 5) verbunden sind, wobei das Getriebeaggregat (G) über eine Dreipunktlagerung (6, 7, 8) mit den Quer- und Längsträgern (4, 5 und 2a, 3a) verbunden ist und die Achswellen (17, 18) des Aggregats (G) sich durch die Durchstecköffnung (16) zum Rad hin erstrecken, **dadurch gekennzeichnet, daß** die Längsträger (2a, 3a) jeweils Kröpfungen in mindestens einer horizontalen und mindestens einer vertikalen Ebene aufweisen, und sich die Durchstecköffnungen (16) und definierte Lagerpunkte (9, 10 und 14, 15) für die Radführungsglieder (11, 12 und 15) und Dreipunkt-Lagerpunkte (6, 7, 8) für das Getriebeaggregat (G) bilden, und daß der obenliegende Längsträger (2a) mit seinem - in Fahrtrichtung (F) gesehen - vornliegenden freien Ende (23) unter einem Winkel zum untenliegenden Längsträger (3a) abgebogen und mit seinem stirnseitigen Ende am untenliegenden Längsträger (3a) verbunden ist und daß die beiden in Fahrtrichtung (F) gesehen - hintenliegenden freien Endstücke (23a und 24) der Längsträger (2a, 3a) auf einer gemeinsamen Strecke übereinanderliegen und verbunden sind und daß der vornliegende Querträger (4) eine etwa mittig angeordnete Aufnahmemulde (34) für einen Gehäusehals des Getriebeaggregats (G) aufweist und in diesem Bereich innenseitig des Querträgers (4) eine erste innenliegende Lageraufnahme (6) für das Aggregat (G) angeordnet ist.

2. Fahrschemel nach Anspruch 1, **dadurch gekennzeichnet, daß** der eine untenliegende Längsträger (3a) endseitig jeweils ein - in Fahrtrichtung (F) gesehen - vorderes Lager (19, 21) und der obenliegende weitere Längsträger (2a) jeweils ein - in Fahrtrichtung (F) gesehen - hinteres Lager (20, 22) zur Befestigung am Fahrzeugaufbau aufweist.

3. Fahrschemel nach den Ansprüchen 1 oder 2, **dadurch gekennzeichnet, daß** die Lager (19, 21) und 20, 22) in verschiedenen horizontalen Höhenebenen (X-X und Z-Z) liegen, wobei die vorderen Lager (19, 21) in einer tiefergelegenen Ebene (X-X) liegen als die hinteren Lager (20, 22).

4. Fahrschemel nach den Ansprüchen 2 oder 3, **dadurch gekennzeichnet, daß** die freien Enden der Längsträger (2a, 3a) zur Aufnahme und Verbindung mit den Lagern (20, 22) und 19, 21) mit einer Höhe (h) flach geformt und mit einer zum jeweiligen Lager korrespondierenden halbkreisförmigen Aufnahme (25) versehen sind.

5. Fahrschemel nach Anspruch 1, **dadurch gekennzeichnet, daß** die Längsträger (2a, 3a) aus innenhochdruckumgeformten Bauteilen bestehen.

6. Fahrschemel nach Anspruch 1, **dadurch gekennzeichnet, daß** der vornliegende Querträger (4) unmittelbar mit den Längsträgern (2a, 3a) sowie zusätzlich über mindestens ein Konsolblech (26) mit diesem verbunden ist.

7. Fahrschemel nach den Ansprüchen 1 oder 9, **dadurch gekennzeichnet, daß** der vornliegende Querträger (4) zweischalig ausgeführt ist und aus im Querschnitt U-förmigen Profilen (30, 31) besteht, die miteinander verbunden ein geschlossenes, einen Hohlraum (32) aufweisendes Trägerprofil ergeben.

8. Fahrschemel nach Anspruch 1, **dadurch gekennzeichnet, daß** der - in Fahrtrichtung (F) gesehen - hintenliegende Querträger (5) zweischalig ausgeführt ist und aus einem inneren Winkelprofil (35) und einem äußeren U-Profil (36) besteht, die zu beiden Seiten der Längsmittenebene (L-L) des Fahrzeugs durch eine Einbuchtung (37) einen etwa dreieckförmigen Hohlraum (38) und in Bereichen der freien Enden einen etwa viereckförmigen Hohlraum (38a) einschließen.

9. Fahrschemel nach Anspruch 8, **dadurch gekennzeichnet, daß** das außenliegende Profil (35) eine sich zu beiden Seiten der Längsmittenebene (L-L) des Fahrzeugs erstreckende äußere Einbuchtung (37) für eine Reserveradmulde mit dem dreieckförmigen Hohlraum (38) besitzt.

10. Fahrschemel nach einem der vorhergehenden Ansprüche, **dadurch gekennzeichnet, daß** zwischen dem - in Fahrtrichtung (F) gesehen - hintenliegenden Querträger (5) sowie zwischen Lagerkonsolen (7a, 8a) am oberen Längsträger (2a) die Lager (7, 8) für das Getriebeaggregat (G) angeordnet und befestigt sind.

11. Fahrschemel nach Anspruch 1 oder einem oder mehreren der vorhergehenden Ansprüche, **dadurch gekennzeichnet, daß** am obenliegenden Längsträger (2a) Lagerkonsolen (9, 10) für Lager von Querlenkern (11, 12) eines oberen Radführungsgliedes befestigt sind, wobei am untenliegenden Längsträger (3a) weitere Lagerkonsolen (13, 14) für Lager eines Dreieckslenkers (15) eines unteren Radführungsgliedes vorgesehen sind.

12. Fahrschemel nach Anspruch 11, **dadurch gekennzeichnet, daß** die eine Lagerkonsole (14) mit dem freien Ende (23a) des obenliegenden Längsträgers (2a) verbunden ist und gleichzeitig eine formschlüssige Aufnahme für das freie Ende (24) des untenliegenden Längsträgers (3a) zum Verbinden aufweist.

## Claims

1. A sub-frame for a motor vehicle, especially for a rear axle of a motor vehicle, with a frame structure fixable to the vehicle body, at least comprising transverse members (4, 5) which are connected to longitudinal members (2a, 3a), and mountings (9, 10 and 11, 12) for wheel control members are provided on the longitudinal members (2a, 3a), and a transmission assembly (G) is arranged in the frame structure between the longitudinal and transverse members (2a, 3a and 4, 5), wherein a longitudinal-member structure (2, 3) on each side each comprises two longitudinal members (2a, 3a) which are arranged one above the other and have between them an insertion opening (16) for axle shafts (17, 18) of the transmission assembly (G) and which substantially converge at their ends and are connected to the transverse members (4, 5), wherein the transmission assembly (G) is connected to the transverse and longitudinal members (4, 5 and 2a, 3a) by a three-point mounting (6, 7, 8), and the axle shafts (17, 18) of the assembly (G) extend through the insertion opening (16) towards the wheel, **characterised in that** the longitudinal members (2a, 3a) each have bends in at least one horizontal and at least one vertical plane, and the insertion openings (16) and defined mounting points (9, 10 and 14, 15) for the wheel control members (11, 12 and 15) and three-point mounting points (6, 7, 8) for the transmission assembly (G) are formed, and **in that** the upper longitudinal member (2a) is bent with its forward free end (23) - seen in the direction of travel (F) - at an angle to the lower longitudinal member (3a) and is connected by its front end to the lower longitudinal member (3a), and **in that** the two rearward free end pieces (23a and 24) of the longitudinal members (2a, 3a) - seen in the direction of travel (F) - lie above one another over a common distance and are connected, and **in that** the forward transverse member (4) has a substantially centrally arranged locating recess (34) for a housing neck of the transmission assembly (G), and in this region a first, inner mounting retainer (6) for the assembly (G) is arranged on the inside of the transverse member (4).

2. A sub-frame according to claim 1, **characterised in that** each lower longitudinal member (3a) has a front bearing (19, 21) - seen in the direction of travel (F) - at its end, and each upper longitudinal member (2a) has a rear bearing (20, 22) - seen in the direction of travel (F) - for attachment to the vehicle body.

3. A sub-frame according to claim 1 or 2, **characterised in that** the bearings (19, 21 and 20, 22) lie in different horizontal height planes (X-X and Z-Z), the front bearings (19, 21) lying in a lower plane (X-X) than the rear bearings (20, 22).

4. A sub-frame according to claim 2 or 3, **characterised in that** the free ends of the longitudinal members (2a, 3a) for receiving and for connection to the bearings (20, 22 and 19, 21) are formed flat with a height (h) and are provided with a semi-circular retainer (25) corresponding to the respective bearing.

5. A sub-frame according to claim 1, **characterised in that** the longitudinal members (2a, 3a) comprise components shaped by internal high pressure.

6. A sub-frame according to claim 1, **characterised in that** the forward transverse member (4) is directly connected to the longitudinal members (2a, 3a) and is additionally connected via at least one sheet-metal bracket (26).

7. A sub-frame according to claim 1 or 9 [*sic*], **characterised in that** the forward transverse member (4) is constructed from two shells and comprises sections (30, 31) which are U-shaped in cross-section and which, when joined together, produce a closed member section containing a hollow space (32).

8. A sub-frame according to claim 1, **characterised in that** the rearward transverse member (5) - seen in the direction of travel (F) - is constructed from two shells and comprises an inner angle section (35) and an outer U-section (36) which, on both sides of the longitudinal central plane (L-L) of the vehicle, enclose a substantially triangular hollow space (38) owing to an indentation (37) and, in the region of the free ends, enclose a substantially square hollow space (38a).

9. A sub-frame according to claim 8, **characterised in that** the outer section (35 [sic - 36]) has an outer indentation (37), extending on both sides of the longitudinal central plane (L-L) of the vehicle, for a spare-wheel recess provided with the triangular hollow space (38).

10. A sub-frame according to any one of the preceding claims, **characterised in that** the mountings (7, 8) for the transmission assembly (G) are arranged and fixed between the rearward transverse member (5) - seen in the direction of travel (F) - and mounting brackets (7a, 8a) on the upper longitudinal member (2a).

11. A sub-frame according to claim 1 or one or more of the preceding claims, **characterised in that** mounting brackets (9, 10) for the mounting of transverse control arms (11, 12) of an upper wheel control member are fixed to the upper longitudinal member (2a), and further mounting brackets (13, 14) for the mounting of an A-arm (15) of a lower wheel control member are provided on the lower longitudinal member (3a).

12. A sub-frame according to claim 11, **characterised in that** one mounting bracket (14) is connected to the free end (23a) of the upper longitudinal member (2a) and simultaneously has a positive retainer for the free end (24) of the lower longitudinal member (3a) for connecting purposes.

## Revendications

1. Faux-châssis pour un véhicule automobile, en particulier pour un essieu arrière d'un véhicule automobile, avec un bâti de cadre pouvant être fixé à la carrosserie du véhicule, constitué au moins de traverses (4, 5) qui sont reliées à des longerons (2a, 3a) et, sur les longerons (2a, 3a), sont prévus des appuis (9, 10 et 11, 12) pour des organes de guidage des roues, et dans le bâti de cadre un groupe de transmission (G) est disposé entre les longerons et traverses (2a, 3a et 4, 5), une structure de longeron (2, 3) de chaque côté comprenant deux longerons (2a, 3a) respectifs superposés qui présentent une ouverture de passage (16) pour des arbres d'essieu (17, 18) du groupe de transmission (G), et se réunissent à peu près à leur extrémité et sont reliés aux traverses (4, 5), le groupe de transmission (G) étant relié, par un support à trois points ( 6, 7, 8), aux traverses et longerons (4, 5 et 2a, 3a), et les arbres d'essieu (17, 18) du groupe (G) s'étendant à travers l'ouverture de passage (16) vers la roue, **caractérisé en ce que** les longerons (2a, 3a) comportent chacun des coudes dans au moins un plan horizontal et au moins un plan vertical, et les ouvertures de passage (16) formant des points d'appui (9, 10 et 14, 15) définis pour les organes de guidage des roues (11, 12 et 15), et des points d'appui à trois points (6, 7, 8) pour la transmission (G), et **en ce que** le longeron (2a) situé à la partie supérieure est replié par son extrémité libre (23) située à l'avant - vu dans le sens de marche (F) - suivant un angle par rapport au longeron (3a) situé dans la partie inférieure, et est relié, par son extrémité frontale, au longeron (3a) situé à la partie inférieure, et **en ce que** les deux embouts libres (23a et 24) situés à l'arrière - vu dans le sens de marche (F) - des longerons (2a, 3a), sont superposés et reliés sur une distance commune, et **en ce que** la traverse (4) située à l'avant présente un creux de réception (34), disposé à peu près au milieu, pour un col de carter du groupe de transmission (G) et dans cette zone, sur le côté intérieur de la traverse (4), est disposé un premier logement de support (6) situé à l'intérieur pour le groupe (G).

2. Faux-châssis selon la revendication 1, **caractérisé en ce qu'**un longeron (3a) situé à la partie supérieure comporte à chacune des ses extrémités un support avant (19, 21) - vu dans le sens de marche (F) - et l'autre longeron (2a) situé à la partie inférieure comporte un support arrière (20, 22) - vu dans le sens de marche (F) - pour la fixation à la carrosserie du véhicule.

3. Faux-châssis selon les revendications 1 ou 2, **caractérisé en ce que** les supports (19, 21 et 22) se situent dans différents plans horizontaux de la hauteur (X-X, Z-Z), les supports avant (19, 21) se situant dans un plan (X-X) plus bas que les supports arrière (20, 22).

4. Faux-châssis selon les revendications 2 ou 3, **caractérisé en ce que** les extrémités libres des longerons (2a, 3a) sont formées plates pour la réception et la liaison avec les supports (20, 22 et 19, 21), avec une hauteur (h), et sont pourvues d'un logement (25) en forme de demi-cercle correspondant au support respectif.

5. Faux-châssis selon la revendication 1, **caractérisé en ce que** les longerons (2a, 3a) sont constitués de composants formés sous haute pression interne.

6. Faux-châssis selon la revendication 1, **caractérisé en ce que** la traverse (4) située à l'avant est reliée directement aux longerons (2a, 3a) ainsi qu'en supplément, par au moins une tôle de console (26).

7. Faux-châssis selon les revendications 1 ou 6, **caractérisé en ce que** la traverse (4) située à l'avant est réalisée à double coque et est constituée de profilés (30, 31) de section transversale (U) qui, reliés entre eux, forment un profilé de support fermé présentant une cavité (32).

8. Faux-châssis selon la revendication 1, **caractérisé en ce que** la traverse (5) située à l'arrière - vu dans le sens de marche (F) - est réalisée à double coque et est constituée d'un profilé coudé intérieur (35) et d'un profilé en U extérieur (36) qui, des deux côtés du plan médian longitudinal (L-L) du véhicule, enferment, par un enfoncement (37), une cavité (38) approximativement triangulaire et, dans les zones des extrémités libres, une cavité (38a) approximativement rectangulaire.

9. Faux-châssis selon la revendication 8, **caractérisé en ce que** le profilé (5) situé à l'extérieur présente un enfoncement (37) extérieur s'étendant des deux côtés du plan médian longitudinal (L-L) du véhicule, pour un logement de roue de secours avec la cavité triangulaire (38).

10. Faux-châssis selon l'une des revendications précédentes, **caractérisé en ce que** les paliers (7, 8) pour le groupe de transmission (G) sont disposés et fixés entre la traverse (5) située à l'arrière - vu dans le sens de marche (F) - ainsi qu'entre des consoles d'appui (7a, 8a) sur le longeron supérieur (2a).

11. Faux-châssis selon la revendication 1 ou une ou plusieurs des revendications précédentes, **caractérisé en ce que** sur le longeron (2a) situé à la partie supérieure sont fixées des consoles d'appui (9, 10) pour des paliers de bras oscillants transversaux (11, 12) d'un organe de guidage de roue supérieur, sur le longeron (3a) situé à la partie inférieure étant prévues d'autres consoles d'appui (13, 14) pour des paliers d'un bras oscillant triangulaire (15) d'un organe de guidage de roue inférieur.

12. Faux-châssis selon la revendication 1, **caractérisé en ce qu'**une console d'appui (14) est reliée à l'extrémité libre (23a) du longeron (2a) situé à la partie supérieure, et présente en même temps un logement par complémentarité de formes pour l'extrémité libre (24) du longeron (3a) situé à la partie inférieure, pour la liaison.
